# EUROPEAN PATENT SPECIFICATION

(11) **EP 4 137 436 B1**
(45) Date of publication and mention of the grant of the patent: **23.04.2025**
(21) Application number: 21787980.8
(22) Date of filing: 08.02.2021
(51) Int. Cl.: B66F 7/06, B66F 9/24, B65G 1/04, B66F 9/06

(54) **LIFTING DEVICE AND AUTOMATED GUIDED VEHICLE**
HEBEVORRICHTUNG UND AUTOMATISIERTES GEFÜHRTES FAHRZEUG
DISPOSITIF DE LEVAGE ET VÉHICULE GUIDÉ AUTOMATISÉ

(30) Priority: 17.04.2020 CN 202020585967 U
(43) Date of publication of application: 22.02.2023
(73) Proprietor: Hangzhou Hikrobot Co., Ltd., Hangzhou, Zhejiang 310051 (CN)
(72) Inventor: XIA, Zhe, Hangzhou, Zhejiang 310051 (CN)
(74) Representative: BRP Renaud & Partner mbB Rechtsanwälte Patentanwälte Steuerberater
(86) International application number: PCT/CN2021/076037
(87) International publication number: WO 2021/208579

(56) References cited:
- CN-A- 110 615 218
- CN-A- 110 615 376
- CN-U- 208 603 643
- CN-U- 212 049 253
- CN-U- 212 050 356
- JP-A- 2000 211 897

## Description

The present application claims the priority to a Chinese patent application No. 202020585967.1, filed with the China National Intellectual Property Administration on April 17, 2020 and entitled "Lifting device and automatic guided transport vehicle".

### Technical Field

The present application relates to the technical field of wheeled mobile robots, and in particular to a lifting device and an automatic guided transport vehicle.

### Background

At present, the main lifting solutions are: single lead screw lifting, multiple lead screws lifting, etc. Wherein, the lifting bearing capacity of the single lead screw lifting method is limited by the lead screw diameter. If there is a need to increase its bearing capacity, it is necessary to increase the lead screw diameter, and the matched transmission gear and bearings will also become larger, resulting in greater processing difficulty, thus increasing its cost. In order to achieve the requirements of the jointly lifting of multiple lead screws, the multiple lead screws lifting method requires higher assembly accuracy, and correspondingly requires higher processing accuracy of parts, which leads to higher processing difficulty and thus increases its cost. Therefore, whether it is implemented by a single lead screw or multiple lead screws, the cost is high.

CN110615218A discloses a method for constructing a synchronous lifting mechanism on a shuttling transfer vehicle, which solves the problem that the required power for a lifting motor is large in an existing transfer vehicle. The invention changes the mode that a lifting mechanism of a traditional shuttling transfer vehicle is a whole vehicle frame, and separates the lifting mechanism from the whole vehicle frame. The vehicle frame of the shuttling transfer vehicle is mainly equipped with a driving mechanism for vehicle movement and a synchronous lifting mechanism. The driving mechanism for vehicle movement is mainly responsible for travelling of the vehicle, and is mainly composed of a driving motor, a driving motor shaft, a driving wheel and a driven wheel. The synchronous lifting mechanism is mainly composed of a lifting motor, two sets of parallelogram four-linkage synchronous driving mechanisms, and lifting bearing frame plate lifting mechanisms installed on a rear frame of the vehicle body and a front frame of the vehicle body. The power of the lifting motor only needs to meet the requirements for lifting weight of tray and goods, thus greatly reducing the power required by the lifting motor. This document discloses the preamble of claim 1.

CN110615376A discloses a tray lifting mechanism for a shuttling vehicle, which solves the problem that the lifting mechanism is prone to fall back freely during travelling in the existing shuttle vehicles. The parallelogram four-linkage mechanism is used as the lifting mechanism to replace a traditional eccentric wheel lifting mechanism. A frame of the shuttling vehicle is taken as the bottom edge of the four-linkage mechanism, and the top edge of the four-linkage mechanism is taken as an actuating mechanism for lifting the tray. The parallel left and right swing vertical rods are pushed by a gear and rack mechanism to swing. When lifting, the gear and rack mechanism pushes the two parallel swing vertical rods pass through a vertical position at a 90-degree relative to a vehicle plate of the shuttling vehicle, and then the two parallel swing vertical rods is limited by a fixed limiting block, so that the lifting position is fixed. By limiting the two swing rods beyond the 90-degree vertical position, the self-falling of the four-linkage mechanism is fundamentally avoided, that is, the phenomenon is avoided that the shuttling vehicle leaves while the goods is remained on the way during transporting goods.

### Summary

In view of above, embodiments of the present disclosure provide a lifting device and an automatic guided transport vehicle with a low cost and a large lifting bearing capacity.

The invention is set out in the appended set of claims.

According to a first aspect of the embodiment of the present disclosure, there is provided a lifting device, including a power component and a driving shaft connected with the power component, wherein,
the driving shaft is connected with a first swing arm and a second swing arm that are arranged to be spaced apart from each other;
the first swing arm is hinged with a first linkage mechanism, the second swing arm is hinged with a second linkage mechanism, and a lifting platform is provided on a top of the first linkage mechanism and a top of the second linkage mechanism.

In some embodiments, a first hold hoop and a second hold hoop are symmetrically provided on the driving shaft, one end of the first hold hoop and one end of the second hold hoop are fixedly connected to the driving shaft respectively, the other end of the first hold hoop is connected with the first swing arm, and the other end of the second hold hoop is connected with the second swing arm.

In some embodiments, the other end of the first hold hoop is hinged with the first swing arm, and the other end of the second hold hoop is hinged with the second swing arm.

In some embodiments, the other end of the first hold hoop is connected with the other end of the second hold hoop through a connecting shaft that is arranged in parallel to the driving shaft.

In some embodiments, a gear is fixedly connected on the driving shaft between the first swing arm and the second swing arm, the power component is connected with the driving shaft through the gear, the gear is provided with a notch at a circumference thereof, and the connecting shaft passes through the notch.

In some embodiments, a gear is fixedly connected on the driving shaft between the first swing arm and the second swing arm, and is provided with a notch at a circumference thereof, and the power component is connected with the driving shaft through the gear.

In some embodiments, the first linkage mechanism and the second linkage mechanism are multi-linkage mechanisms.

Each of the first linkage mechanism and the second linkage mechanism includes a first linkage, a second linkage, a third linkage, a fourth linkage and a fifth linkage;
one end of the first linkage and one end of the second linkage are each hinged at a fixed hinge point, the third linkage is hinged with the other end of the first linkage and the other end of the second linkage respectively, and the first linkage, the second linkage and the third linkage form a parallelogram mechanism;
one end of the fourth linkage is hinged with the other end of the first linkage, one end of the fifth linkage is hinged with the other end of the second linkage, the other end of the fifth linkage of the first linkage mechanism is hinged with the first swing arm, and the other end of the fifth linkage of the second linkage mechanism is hinged with the second swing arm;
the other end of the fourth linkage and the other end of the fifth linkage are respectively connected with the lifting platform.

In some embodiments, the other end of the fourth linkage of the first linkage mechanism and the other end of the fourth linkage of the second linkage mechanism are respectively hinged with an oblique pull rod, a free end of which is hinged at a fixed hinge point.

In some embodiments, the first linkage mechanism and the second linkage mechanism are transversely connected by a shaft.

According to a second aspect of the embodiment of the present disclosure, it is provided an automatic guided transport vehicle, which includes a vehicle body and the lifting device of any one of the first aspect. The vehicle body is provided with shaft seats, into which both ends of the driving shaft are rotationally connected, the power component is arranged on the vehicle body to drive the driving shaft to rotate, and the first linkage mechanism and the second linkage mechanism are hinged on the vehicle body.

The lifting device and automatic guided transport vehicle provided by the embodiments of the present disclosure include a power component and a driving shaft connected with the power component. The driving shaft is connected with a first swing arm and a second swing arm that are arranged to be spaced apart from each other; a first linkage mechanism is hinged on the first swing arm, a second linkage mechanism is hinged on the second swing arm, and a lifting platform is arranged on the top of the first linkage mechanism and the second linkage mechanism, which provides a multi-linkage lifting solution with a low cost; the lifting bearing capacity is large through the coordinated lifting of multiple linkage mechanisms.

### Brief Description of the Drawings

In order to more clearly describe the technical solution of the embodiments of the disclosure and the prior art, drawings for the embodiments and the prior art will be briefly described below.
FIG. 1 is a front view illustrating the structure of the lifting device in some embodiments of the present disclosure;
FIG. 2 is a partial schematic structural diagram of the lifting device shown in FIG. 1;
FIG. 3 is a right view of the lifting device shown in FIG 1.

### Detailed Description

In order to make objectives, technical solutions and advantages of the present disclosure more apparent, the present disclosure now will be described in detail with reference to the accompanying drawings and the detailed description.

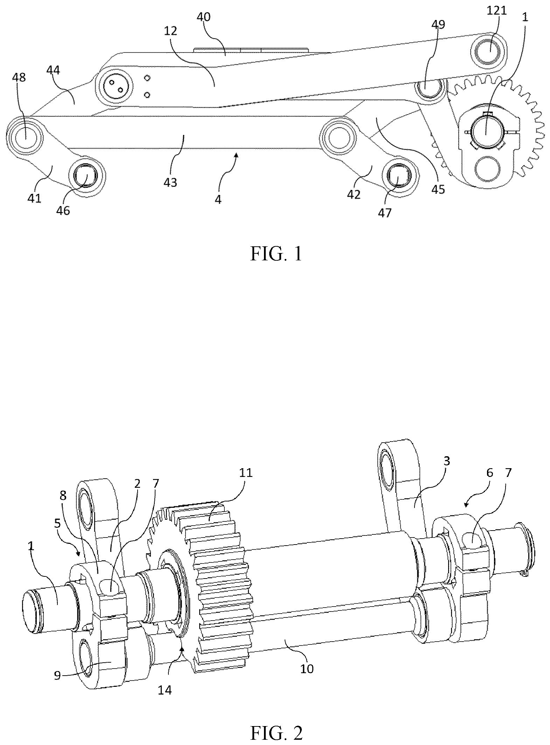

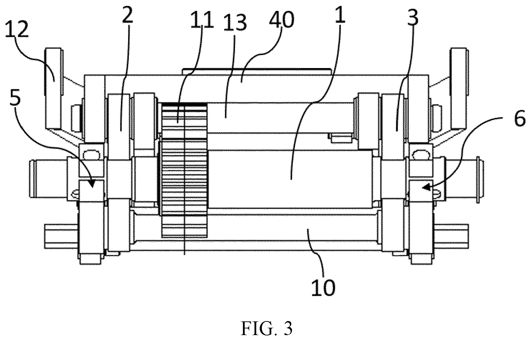

FIG. 1 is a front view illustrating the structure of the lifting device in some embodiments of the present disclosure; FIG. 2 is a partial schematic structural diagram of the lifting device shown in FIG. 1; FIG. 3 is a right view of the lifting device shown in FIG 1. As shown in FIGS. 1 to 3, an embodiment of the present disclosure provides a lifting device, which includes a power component (not shown in the figures) and a driving shaft 1 connected with the power component. The driving shaft 1 is connected with a first swing arm 2 and a second swing arm 3. The first swing arm 2 and the second swing arm 3 are arranged to be spaced apart from each other, that is, the first swing arm 2 and the second swing arm 3 are both connected on the driving shaft 1, and there is a spacing between the first swing arm 2 and the second swing arm 3.

The first swing arm 2 is hinged with a first linkage mechanism 4, the second swing arm 3 is hinged with a second linkage mechanism (not shown in the figures), and the top of the first linkage mechanism 4 and the top of the second linkage mechanism are provided with a lifting platform 40. Wherein, a lifting platform 40 is provided on the top of the first linkage mechanism 4 and the top of the second linkage mechanism, which can mean that the top of the first linkage mechanism 4 and the top of the second linkage mechanism are jointly connected with a lifting platform 40, or the top of the first linkage mechanism 4 is connected with a lifting platform 40, the top of the second linkage mechanism is connected with another lifting platform 40, and the two lifting platforms 40 are fixedly connected through other connectors, so that the two lifting platforms 40 can maintain the same movement state, and surfaces bearing objects on the two lifting platforms 40 are always in a same plane.

Wherein the power component can be either a motor power execution unit or a hydraulic power execution unit, which is used to provide power and drive the driving shaft 1 to rotate. The driving shaft 1, the first swing arm 2 and the second swing arm 3 are power composition parts of the lifting device, which drive the first linkage mechanism 4 and the second linkage mechanism to move along a predetermined trajectory, so as to jointly drive the lifting platform to move upwards and downwards, thereby achieving the lifting function. The lifting method has advantages of large lifting bearing capacity, flexibility and convenience, and a low cost.

It can be understood that FIG. 1 is a basic view, which shows a composition structure on one side of the lifting device, and does not show a symmetrical composition structure on the other side, that is, the second linkage mechanism and the second swing arm 3 are not shown in FIG. 1.

The lifting device provided by the embodiment of the present disclosure includes a power component and a driving shaft 1 connected with the power component. The driving shaft 1 is connected with a first swing arm 2 and a second swing arm 3, and the first swing arm 2 and the second swing arm 3 are arranged to be spaced apart from each other. The first swing arm 2 is hinged with the first linkage mechanism 4, the second swing arm 3 is hinged with the second linkage mechanism (not shown in the figures), and the top of the first linkage mechanism 4 and the top of the second linkage mechanism are provided with a lifting platform. The embodiment of the disclosure provides a multi-linkage lifting solution. Since a kinematic pair between multi-linkage mechanisms is a low pair, its wear is small, so the maintenance cost is low. In addition, the multi-linkage mechanism has low requirements for assembly accuracy, can be conveniently manufactured, and has a low manufacturing cost, so the cost of the lifting device in the embodiment of the present disclosure is low. In addition, the lifting bearing capacity is larger through the collaborative lifting of multiple linkage mechanisms.

As shown in FIG. 2, a first hold hoop 5 and a second hold hoop 6 are symmetrically provided on the driving shaft 1, one end of the first hold hoop 5 and one end of the second hold hoop 6 are respectively connected on the driving shaft 1 fixedly, the other end of the first hold hoop 5 is connected with the first swing arm 2, and the other end of the second hold hoop 6 is connected with the second swing arm 3.

By connecting the first swing arm 2 and the second swing arm 3 with the driving shaft 1 by using a hold hoop, the risk of loosening during the long-time operation of the lifting device due to the use of screws and other connection means can be reduced, thus improving the operation reliability of the lifting device. Moreover, the hold hoop has the characteristics of convenient disassembly and assembly, so the maintenance cost of disassembly and assembly is lower.

The first hold hoop 5 and the second hold hoop 6 are fixed with fasteners through their own connecting structure 7, wherein the fasteners can be screws or bolts.

In some embodiments, the first hold hoop 5 and the second hold hoop 6 are also fixedly connected on the driving shaft 1 through a circlip. For example, at least two grooves can be arranged along the circumference of the driving shaft 1, and a circlip is arranged in each groove, and at least one circlip contacts the side of the first hold hoop 5, and at least one circlip contacts the side of the second hold hoop 6. In this way, the axial movement of the first hold hoop 5 and the second hold hoop 6 during the operation of the lifting device can be limited, so as to improve the stability of the lifting.

The first hold hoop 5 and the second hold hoop 6 can have the same structure, that is, each of the first hold hoop 5 and the second hold hoop 6 can include an upper hoop loop 8 and a lower hoop seat 9, and a connecting structure 7 is arranged at the connection of the upper hoop loop 8 and the lower hoop seat 9. The connecting structure 7 can specifically include an upper connecting boss arranged on the upper hoop loop 8, a lower connecting boss arranged on the lower hoop seat 9, and connecting holes are arranged on both the upper connecting boss and the lower connecting boss, so that fasteners can pass through the connecting holes to fixedly connect upper ends of the upper hoop loop 8 and the lower hoop seat 9, so that the upper hoop loop 8 and the lower hoop seat 9 can be clamped and fixed on the driving shaft 1. The lower end of the lower hoop seat 9 is also provided with a hinge hole for connecting other parts, such as connecting the connecting shaft 10.

In some embodiments, the other end of the first hold hoop 5 is hinged with the first swing arm 2, and the other end of the second hold hoop 6 is hinged with the second swing arm 3. Since the first hold hoop 5 and the second hold hoop 6 are clamped and fixed on the driving shaft 1, when the driving shaft 1 rotates, the driving shaft 1 drives the first hold hoop 5 and the second hold hoop 6 to rotate at the same time, the first hold hoop 5 drives the first swing arm 2 to swing in a predetermined direction, and the second hold hoop 6 drives the second swing arm 3 to swing in a predetermined direction, thus driving the first linkage mechanism 4 and the second linkage mechanism to jointly drive the lifting platform 40 to move upwards and downwards, thus lifting objects.

In some embodiments, the other end of the first hold hoop 5 is connected with the other end of the second hold hoop 6 through a connecting shaft 10 that is arranged in parallel to the driving shaft 1. Both ends of the connecting shaft 10 can be fixedly connected with the hinge hole of the first hold hoop 5 and the hinge hole of the second hold hoop 6 respectively. The first swing arm 2 can be arranged on the outer periphery of the connecting shaft 10 and close to the first hold hoop 5; similarly, the second swing arm 3 can be arranged on the outer periphery of the connecting shaft 10 and close to the second hold hoop 6. In this way, when the first hold hoop 5 and the second hold hoop 6 rotate, the connecting shaft 10 is driven to rotate, and the connecting shaft 10 drives the first swing arm 2 and the second swing arm 3 to rotate synchronously, thus driving the first linkage mechanism 4 and the second linkage mechanism to jointly drive the lifting platform 40 to move upwards and downwards. Therefore, on the one hand, adopting the above solution can improve the synchronization of the collaborative linkage lifting of the first linkage mechanism 4 and the second linkage mechanism on both sides of the driving shaft 1, so as to improve the stability of the lifting; on the other hand, by adding a connecting shaft 10, the driving shaft 1, the first swing arm 2, the second swing arm 3 and the connecting shaft 10 form a frame structure, which has high stability and strength. Therefore, it can reduce the damage of objects during the lifting process, and further improve the lifting bearing capacity.

In some embodiments, a gear 11 is fixedly connected on the driving shaft 1 between the first swing arm 2 and the second swing arm 3, the power component is connected with the driving shaft 1 through the gear 11, and the gear 11 is provided with a notch 14 at the circumference thereof.

By using the gear 11 with the notch 14 to drive the driving shaft 1 to rotate, the structure of the gear 11 is improved. The rotation angle of the driving shaft 1 can be limited without additionally providing a stopper to limit the rotation angle of the driving shaft 1, which not only reduces the cost, but also simplifies the structure of the lifting device in the embodiment of the present disclosure.

In some embodiments, the connecting shaft 10 passes through the notch 14. In this way, the connecting shaft 10 contacts the notch 14 of the gear 11. When the gear 11 rotates, it can provide a driving force to drive the connecting shaft 10 to rotate by mean of the notch 14. The connecting shaft 10 can provide a reaction force to the gear 11, that is, it can support the gear 11, and thus can improve the transmission stability of the gear 11. In addition, since the gear 11, the first hold hoop 5 and the second hold hoop 6 can provide a driving force to the connecting shaft 11, the reaction force borne by the connecting shaft 11 can be dispersed, thus reducing the reaction force borne by the first hold hoop 5 and the second hold hoop, thus reducing the damage of the first hold hoop 5 and the second hold hoop 6 due to the large reaction force.

In some embodiments, the first linkage mechanism 4 and the second linkage mechanism are multi-linkage mechanisms.

Wherein, the first linkage mechanism 4 is symmetrically arranged with the second linkage mechanism.

In some embodiments, the first linkage mechanism 4 and the second linkage mechanism are transversely connected by a shaft 13. In this way, the first linkage mechanism 4 and the second linkage mechanism form an integrated structure, which can further improve the stability of lifting during the collaborative lifting process of the first linkage mechanism 4 and the second linkage mechanism.

As shown in FIG. 1, in some embodiments, the first linkage mechanism 4 and the second linkage mechanism can have the same structure, that is, each of the first linkage mechanism 4 and the second linkage mechanism includes a first linkage 41, a second linkage 42, a third linkage 43, a fourth linkage 44 and a fifth linkage 45.

One end of the first linkage 41 is hinged at a fixed hinge point 46, one end of the second linkage 42 is hinged at a fixed hinge point 47, the third linkage 43 is hinged with the other end of the first linkage 41 and the other end of the second linkage 42 respectively, and the first linkage 41, the second linkage 42 and the third linkage 43 form a parallelogram mechanism.

One end of the fourth linkage 44 is hinged with the other end of the first linkage 41 and is hinged at the hinge point 48. One end of the fifth linkage 45 is hinged with the other end of the second linkage 42. The other end of the fifth linkage 45 of the first linkage mechanism 4 is hinged with the first swing arm 2 and is hinged at the hinge point 49. The other end of the fifth linkage 45 of the second linkage mechanism is hinged with the second swing arm 3, and its hinge point can be defined as the hinge point of the second linkage (not shown in the figures), and corresponds to the hinge point 49 with one on the left side and the other one on the right side; the other end of the fourth linkage 44 and the other end of the fifth linkage 45 are respectively connected with the lifting platform 40.

In the embodiment of the present disclosure, the power component drives the driving shaft 1 to drive the first swing arm 2 and the second swing arm 3 to rotate, the first swing arm 2 and the second swing arm 3 apply the rotating force on the hinge point 49 and the second linkage hinge point, respectively driving the first linkage mechanism 4 and the second linkage mechanism to move in the vertical direction, so as to move objects upwards and downwards on the lifting platform.

In some embodiments, the other end of the fourth linkage 44 of the first linkage mechanism 4 and the other end of the fourth linkage 44 of the second linkage mechanism are respectively hinged with an oblique pull rod 12, a free end 121 of which is hinged at a fixed hinge point.

It can be understood that, in the operation state of the lifting device in the embodiment of the present disclosure, the driving force provided by the power component can prevent the fourth linkage 44 from rotating around the hinge shaft at one end, which may lead to the possibility of motion uncertainty. That is, the power component can prevent the linkages of the first linkage mechanism 4 and the second linkage mechanism from not moving according to a predetermined trajectory. However, once the power component fails, the first linkage mechanism 4 and the second linkage mechanism might not move according to the predetermined trajectory without bearing additional pulling force, which will lead to potential safety hazards during the lifting process.

In the embodiment of this disclosure, the free ends of the oblique pull rods 12 are connected at fixed hinge points by hinging the oblique pull rods 12 at the other ends of the fourth linkages 44 of the first linkage mechanism 4 and the second linkage mechanism. For example, columns are arranged on both sides of the lifting device, and the free ends 121 of the oblique pull rods 12 are fixed on the columns. In this way, the first linkage mechanism 4 and the second linkage mechanism are always pulled during the lifting process. As the oblique pull rod 12 is hinged, it does not affect the lifting function of the first linkage mechanism 4 and the second linkage mechanism, and it can also provide pulling forces on the first linkage mechanism 4 and the second linkage mechanism, so as to prevent the safety accidents caused by the failure of each linkage of the first linkage mechanism 4 and the second linkage mechanism to move according to the predetermined trajectory due to the failure of power components and other reasons.

### Embodiment 2

An embodiment of the present disclosure further provides an automatic guided transport vehicle, which includes a vehicle body and a lifting device described in any one of the above embodiments. The lifting device is arranged on the vehicle body.

In some embodiments, the vehicle body is provided with shaft seats, into which both ends of the driving shaft 1 are respectively rotationally connected. The power component is fixed on the vehicle body to drive the driving shaft 1 to rotate. The first linkage mechanism 4 and the second linkage mechanism are hinged on the vehicle body.

In some embodiments, the vehicle body is also provided with a column, the first linkage mechanism 4 and the second linkage mechanism are respectively hinged with an oblique pull rod 12, and the free end of the oblique pull rod 12 is hinged on the column.

It should be noted that the automatic guided transport vehicle provided in this embodiment is also called a transfer robot, since the automatic guided transport vehicle has the lifting device described in any one of the embodiment 1, the technical effect that the automatic guided transport vehicle can achieve is basically the same as that in the embodiment 1, they can refer to each other, and will not be repeatedly described here.

The lifting device provided by the present disclosure is a multi-linkage mechanism implementation solution, and has characteristics of a low cost and a large lifting bearing capacity. The lifting is more stable due to the adoption of a multi-linkage mechanism and the arrangement of multiple connection hinge points. Compared with the lead screw as the main part of the lifting, the wear is small and the cost is low.

In this embodiment, where the fixed connection is involved, such as the connection of various shafts, the connection of multi-purpose circlips are used, and the risk of looseness during long time operation with screw connections is reduced, and the maintenance cost of disassembly and assembly is lower.

It should be noted that, in this text, the terms such as "up", "down", and the like indicating the orientation or position relationship are only used to facilitate the description of this disclosure and simplify the description, rather than indicating or implying that the device or element referred to must have a specific orientation, structure and operation in a specific orientation, so they cannot be understood as restrictions on the present disclosure. Unless otherwise specified and defined, the terms such as "installation", "connected" and "connection" shall be understood broadly, for example, they can be fixed connection, removable connection or integrated connection; it can be directly connected or indirectly connected through intermediate media. For example, the relationship terms herein such as "first", "second", and the like are only used for distinguishing one entity or operation from another entity or operation, but do not necessarily require or imply that there is any actual relationship or order between these entities or operations. Moreover, the terms "include", "comprise" or any other variants thereof are intended to cover a non-exclusive inclusion, so that processes, methods, articles, or devices including a series of elements include not only those elements listed but also those not specifically listed or elements intrinsic to these processes, methods, articles, or equipment. Without further limitations, elements defined by the sentences "comprise(s) a..." or "include(s) a..." do not exclude that there are other identical elements in the processes, methods, articles, or devices which include these elements. For ordinary technicians in the art, it can be understood through specific situations.

The above are only specific embodiments of the present disclosure, the scope of protection of the disclosure is limited to that as defined by the claims.

## Claims

1. A lifting device, comprising
a power component and a driving shaft (1) connected with the power component, wherein,
the driving shaft (1) is connected with a first swing arm (2) and a second swing arm (3) that are arranged to be spaced apart from each other;
the first swing arm (2) is hinged with a first linkage mechanism (4), the second swing arm (3) is hinged with a second linkage mechanism, and a lifting platform (40) is provided on a top of the first linkage mechanism (4) and a top of the second linkage mechanism,
wherein each of the first linkage mechanism (4) and the second linkage mechanism comprises a first linkage (41), a second linkage (42), a third linkage (43) and a fourth linkage (44), **characterised in that** each of the first (4) and second linkage mechanisms comprise a fifth linkage (45) wherein
one end of the first linkage (41) and one end of the second linkage (42) are each hinged at a fixed hinge point (46, 47); the third linkage (43) is hinged with the other end of the first linkage (41) and the other end of the second linkage (42), respectively; and the first linkage (41), the second linkage (42) and the third linkage (43) form a parallelogram mechanism;
one end of the fourth linkage (44) is hinged with the other end of the first linkage (41); one end of the fifth linkage (45) is hinged with the other end of the second linkage (42); the other end of the fifth linkage (45) of the first linkage mechanism (4) is hinged with the first swing arm (2); and the other end of the fifth linkage (45) of the second linkage mechanism is hinged with the second swing arm (3);
the other end of the fourth linkage (44) and the other end of the fifth linkage (45) are respectively connected with the lifting platform (40).

2. The lifting device of claim 1, wherein a first hold hoop (5) and a second hold hoop (6) are symmetrically provided on the driving shaft (1); one end of the first hold hoop (5) and one end of the second hold hoop (6) are fixedly connected to the driving shaft (1), respectively; the other end of the first hold hoop (5) is connected with the first swing arm (2), and the other end of the second hold hoop (6) is connected with the second swing arm (3).

3. The lifting device of claim 2, wherein the other end of the first hold hoop (5) is hinged with the first swing arm (2), and the other end of the second hold hoop (6) is hinged with the second swing arm (3).

4. The lifting device of claim 2, wherein the other end of the first hold hoop (5) is connected with the other end of the second hold hoop (6) through a connecting shaft (10) that is arranged in parallel to the driving shaft (1).

5. The lifting device of claim 4, wherein a gear is fixedly connected on the driving shaft between the first swing arm and the second swing arm; the power component is connected with the driving shaft through the gear; and the gear is provided with a notch at a circumference thereof, and the connecting shaft (10) passes through the notch (14).

6. The lifting device of claim 1, wherein a gear is fixedly connected on the driving shaft between the first swing arm and the second swing arm, and is provided with a notch at a circumference thereof, and the power component is connected with the driving shaft through the gear.

7. The lifting device of claim 1, wherein the first linkage mechanism (4) and the second linkage mechanism are multi-linkage mechanisms.

8. The lifting device of claim 1, wherein the other end of the fourth linkage (44) of the first linkage mechanism (4) and the other end of the fourth linkage (44) of the second linkage mechanism are respectively hinged with an oblique pull rod (12), a free end of which is hinged at a fixed hinge point.

9. The lifting device of claim 1, wherein the first linkage mechanism (4) and the second linkage mechanism are transversely connected by a shaft.

10. An automatic guided transport vehicle, **characterized in that** the automatic guided transport vehicle comprises a vehicle body and the lifting device of any one of claims 1 to 9, wherein,
the vehicle body is provided with shaft seats, into which both ends of the driving shaft (1) are rotationally connected; the power component is arranged on the vehicle body to drive the driving shaft (1) to rotate, and the first linkage mechanism (4) and the second linkage mechanism are hinged on the vehicle body.

## Patentansprüche

1. Hebevorrichtung, die eine Antriebskomponente und eine mit der Antriebskomponente verbundene Antriebswelle (1) umfasst, wobei
die Antriebswelle (1) mit einem ersten Schwenkarm (2) und einem zweiten Schwenkarm (3) verbunden ist, die voneinander beabstandet angeordnet sind;
der erste Schwenkarm (2) an einem ersten Verbindungsmechanismus (4) angelenkt ist, der zweite Schwenkarm (3) an einem zweiten Verbindungsmechanismus angelenkt ist und eine Hebebühne (40) an der Oberseite des ersten Verbindungsmechanismus (4) und an der Oberseite des zweiten Verbindungsmechanismus bereitgestellt ist,
wobei der erste Verbindungsmechanismus (4) und der zweite Verbindungsmechanismus jeweils eine erste Verbindung (41), eine zweite Verbindung (42), eine dritte Verbindung (43) und eine vierte Verbindung (44) umfassen, **dadurch gekennzeichnet, dass** jeder der ersten (4) und zweiten Verbindungsmechanismen eine fünfte Verbindung (45) umfasst, wobei
ein Ende der ersten Verbindung (41) und ein Ende der zweiten Verbindung (42) jeweils an einem festen Gelenkpunkt (46, 47) angelenkt sind; die dritte Verbindung (43) an dem anderen Ende der ersten Verbindung (41) bzw. dem anderen Ende der zweiten Verbindung (42) angelenkt ist; und die erste Verbindung (41), die zweite Verbindung (42) und die dritte Verbindung (43) einen Parallelogrammmechanismus bilden;
ein Ende der vierten Verbindung (44) an dem anderen Ende der ersten Verbindung (41) angelenkt ist; ein Ende der fünften Verbindung (45) an dem anderen Ende der zweiten Verbindung (42) angelenkt ist; das andere Ende der fünften Verbindung (45) des ersten Verbindungsmechanismus (4) an dem ersten Schwenkarm (2) angelenkt ist; und das andere Ende der fünften Verbindung (45) des zweiten Verbindungsmechanismus an dem zweiten Schwenkarm (3) angelenkt ist;
wobei das andere Ende der vierten Verbindung (44) und das andere Ende der fünften Verbindung (45) jeweils mit der Hebebühne (40) verbunden sind.

2. Hebevorrichtung nach Anspruch 1, wobei ein erster Haltebügel (5) und ein zweiter Haltebügel (6) symmetrisch an der Antriebswelle (1) bereitgestellt sind; ein Ende des ersten Haltebügels (5) und ein Ende des zweiten Haltebügels (6) jeweils fest mit der Antriebswelle (1) verbunden sind; das andere Ende des ersten Haltebügels (5) mit dem ersten Schwenkarm (2) und das andere Ende des zweiten Haltebügels (6) mit dem zweiten Schwenkarm (3) verbunden ist.

3. Hebevorrichtung nach Anspruch 2, wobei das andere Ende des ersten Haltebügels (5) an dem ersten Schwenkarm (2) und das andere Ende des zweiten Haltebügels (6) an dem zweiten Schwenkarm (3) angelenkt ist.

4. Hebevorrichtung nach Anspruch 2, wobei das andere Ende des ersten Haltebügels (5) mit dem anderen Ende des zweiten Haltebügels (6) über eine Verbindungswelle (10) verbunden ist, die parallel zur Antriebswelle (1) angeordnet ist.

5. Hebevorrichtung nach Anspruch 4, wobei ein Zahnrad fest mit der Antriebswelle zwischen dem ersten Schwenkarm und dem zweiten Schwenkarm verbunden ist; die Antriebskomponente durch das Zahnrad mit der Antriebswelle verbunden ist; und das Zahnrad an seinem Umfang mit einer Kerbe bereitgestellt ist, und die Verbindungswelle (10) durch die Kerbe (14) verläuft.

6. Hebevorrichtung nach Anspruch 1, wobei ein Zahnrad fest mit der Antriebswelle zwischen dem ersten Schwenkarm und dem zweiten Schwenkarm verbunden und an einem Umfang mit einer Kerbe bereitgestellt ist, und die Antriebskomponente über das Zahnrad mit der Antriebswelle verbunden ist.

7. Hebevorrichtung nach Anspruch 1, wobei der erste Verbindungsmechanismus (4) und der zweite Verbindungsmechanismus Mehrfachverbindungsmechanismen sind.

8. Hebevorrichtung nach Anspruch 1, wobei das andere Ende der vierten Verbindung (44) des ersten Verbindungsmechanismus (4) und das andere Ende der vierten Verbindung (44) des zweiten Verbindungsmechanismus jeweils an einer schrägen Zugstange (12) angelenkt sind, von der ein freies Ende an einem festen Gelenkpunkt angelenkt ist.

9. Hebevorrichtung nach Anspruch 1, wobei der erste Verbindungsmechanismus (4) und der zweite Verbindungsmechanismus durch eine Welle in Querrichtung verbunden sind.

10. Automatisch geführtes Transportfahrzeug, **dadurch gekennzeichnet, dass** das automatisch geführte Transportfahrzeug eine Karosserie und die Hebevorrichtung nach einem der Ansprüche 1 bis 9 umfasst, wobei,
die Karosserie mit Wellensitzen bereitgestellt ist, in denen beide Enden der Antriebswelle (1) drehbar verbunden sind; die Antriebskomponente an der Fahrzeugkarosserie angeordnet ist, um die Antriebswelle (1) zur Drehung anzutreiben, und der erste Verbindungsmechanismus (4) und der zweite Verbindungsmechanismus an der Fahrzeugkarosserie angelenkt sind.

## Revendications

1. Dispositif de levage, comprenant un composant de puissance et un arbre d'entraînement (1) raccordé au composant de puissance, dans lequel,
l'arbre d'entraînement (1) est raccordé à un premier bras pivotant (2) et à un second bras pivotant (3) qui sont agencés de manière à être espacés l'un de l'autre ;
le premier bras pivotant (2) est articulé avec un premier mécanisme de liaison (4), le second bras pivotant (3) est articulé avec un second mécanisme de liaison, et une plate-forme de levage (40) est prévue sur une partie supérieure du premier mécanisme de liaison (4) et une partie supérieure du second mécanisme de liaison,
dans lequel chacun du premier mécanisme de liaison (4) et du second mécanisme de liaison comprend une première liaison (41), une deuxième liaison (42), une troisième liaison (43) et une quatrième liaison (44), **caractérisé en ce que** chacun des premier (4) et second mécanismes de liaison comprend une cinquième liaison (45), dans lequel
une extrémité de la première liaison (41) et une extrémité de la deuxième liaison (42) sont chacune articulées au niveau d'un point d'articulation fixe (46, 47) ; la troisième liaison (43) est articulée avec respectivement l'autre extrémité de la première liaison (41) et l'autre extrémité de la deuxième liaison (42) ; et la première liaison (41), la deuxième liaison (42) et la troisième liaison (43) forment un mécanisme à parallélogramme ;
une extrémité de la quatrième liaison (44) est articulée avec l'autre extrémité de la première liaison (41) ; une extrémité de la cinquième liaison (45) est articulée avec l'autre extrémité de la deuxième liaison (42) ; l'autre extrémité de la cinquième liaison (45) du premier mécanisme de liaison (4) est articulée avec le premier bras pivotant (2) ; et l'autre extrémité de la cinquième liaison (45) du second mécanisme de liaison est articulée avec le second bras pivotant (3) ;
l'autre extrémité de la quatrième liaison (44) et l'autre extrémité de la cinquième liaison (45) sont respectivement raccordées à la plate-forme de levage (40).

2. Dispositif de levage selon la revendication 1, dans lequel un premier cerceau de maintien (5) et un second cerceau de maintien (6) sont prévus symétriquement sur l'arbre d'entraînement (1) ; une extrémité du premier cerceau de maintien (5) et une extrémité du second cerceau de maintien (6) sont respectivement raccordées de manière fixe à l'arbre d'entraînement (1) ; l'autre extrémité du premier cerceau de maintien (5) est raccordée au premier bras pivotant (2), et l'autre extrémité du second cerceau de maintien (6) est raccordée au second bras pivotant (3).

3. Dispositif de levage selon la revendication 2, dans lequel l'autre extrémité du premier cerceau de maintien (5) est articulée avec le premier bras pivotant (2), et l'autre extrémité du second cerceau de maintien (6) est articulée avec le second bras pivotant (3).

4. Dispositif de levage selon la revendication 2, dans lequel l'autre extrémité du premier cerceau de maintien (5) est raccordée à l'autre extrémité du second cerceau de maintien (6) par l'intermédiaire d'un arbre de raccordement (10) qui est agencé parallèlement à l'arbre d'entraînement (1).

5. Dispositif de levage selon la revendication 4, dans lequel un engrenage est raccordé de manière fixe sur l'arbre d'entraînement entre le premier bras pivotant et le second bras pivotant ; le composant de puissance est raccordé à l'arbre d'entraînement par l'intermédiaire de l'engrenage ; et l'engrenage est pourvu d'une encoche sur une circonférence de celui-ci, et l'arbre de raccordement (10) passe à travers l'encoche (14).

6. Dispositif de levage selon la revendication 1, dans lequel un engrenage est raccordé de manière fixe sur l'arbre d'entraînement entre le premier bras pivotant et le second bras pivotant, et est pourvu d'une encoche sur une circonférence de celui-ci, et le composant de puissance est raccordé à l'arbre d'entraînement par l'intermédiaire de l'engrenage.

7. Dispositif de levage selon la revendication 1, dans lequel le premier mécanisme de liaison (4) et le second mécanisme de liaison sont des mécanismes à liaisons multiples.

8. Dispositif de levage selon la revendication 1, dans lequel l'autre extrémité de la quatrième liaison (44) du premier mécanisme de liaison (4) et l'autre extrémité de la quatrième liaison (44) du second mécanisme de liaison sont respectivement articulées avec une tige de traction oblique (12), dont une extrémité libre est articulée au niveau d'un point d'articulation fixe.

9. Dispositif de levage selon la revendication 1, dans lequel le premier mécanisme de liaison (4) et le second mécanisme de liaison sont raccordés transversalement par un arbre.

10. Véhicule de transport à guidage automatique, **caractérisé en ce que** le véhicule de transport à guidage automatique comprend une carrosserie de véhicule et le dispositif de levage selon l'une quelconque des revendications 1 à 9, dans lequel,
la carrosserie de véhicule est pourvue de sièges d'arbre, dans lesquels les deux extrémités de l'arbre d'entraînement (1) sont raccordées en rotation ; le composant de puissance est agencé sur la carrosserie de véhicule pour entraîner l'arbre d'entraînement (1) en rotation, et le premier mécanisme de liaison (4) et le second mécanisme de liaison sont articulés sur la carrosserie de véhicule.
